# EUROPEAN PATENT APPLICATION

(11) **EP 4 293 086 A1**
(43) Date of publication of application: **20.12.2023**
(21) Application number: 22752852.8
(22) Date of filing: 14.02.2022
(51) Int. Cl.: C09D 201/00, B05D 3/12, B05D 7/24, B08B 3/08, B08B 7/00, C09D 7/65, C09D 101/02, C09D 125/08, C09D 129/04, C09D 133/00

(54) **METHOD OF REMOVING POLLUTANTS**

(30) Priority: 12.02.2021 JP 2021021152
(71) Applicant: Kao Corporation, Chuo-ku Tokyo 103-8210 (JP)
(72) Inventor: JOCHI, Yuto, Tokyo 131-8501 (JP); USHIO, Noriaki, Tokyo 131-8501 (JP)
(74) Representative: Hoffmann Eitle
(86) International application number: PCT/JP2022/005562
(87) International publication number: WO 2022/173030

(57) **Abstract**

A method of removing pollutants attached on a surface of interest, the method comprising the steps of: forming a coating film by applying a self-peelable film forming composition containing components (A) to (C) to a surface of interest on which pollutants are attached; drying the coating film; and removing the pollutants together with the coating film by self-peeling of the coating film due to the drying: (A) a film-forming component; (B) a volatile solvent; and (C) a silicone compound.

## Description

### Field of the Invention

The present invention relates to a method of removing pollutants using a self-peelable film which is spontaneously peeled as a coating film is dried after application to a surface of interest.

### Background of the Invention

In general, washing with water or a solvent, wiping, chipping by mechanical power, suction or the like is performed as a method for removing contaminants and powder dust such as fine particles which are attached and remaining on an equipment surface. However, in these operations, workers may inhale a washing liquid or scattered powder dust. In particular, if a washing liquid used is a substance hazardous to human bodies, or substances to be removed are pollutants containing asbestos, hazardous chemical substances, radioactive materials or the like, a means for preventing workers from inhaling the washing liquid and pollutants is required. For example, pollutants in nuclear power plants contain radioactive materials, and therefore have a risk that workers in washing or decommissioning operations are exposed through inhalation and attachment. Thus, a technique for removing such pollutants with high efficiency and safety is required.

Pollutants are characterized by being likely to remain on an equipment surface, particularly on fine portions such as irregularity portions. As an effective technique for removing such pollutants without scattering the pollutants, there is a method using a peelable coating film, in which a coating material is applied to a surface of interest, and dried, and the coating film is then peeled to remove the coating film together with adsorbed pollutants. This technique is effective for removing pollutants remaining in fine portions, but it is difficult to make a starting point of peeling at an end of the coating film at the time of peeling after drying, and if this takes much operation time, there is an increased risk of inhalation of hazardous substances by workers or exposure of workers to hazardous substances. There is also a problem that even collection of a peeled film is difficult in environments which cannot be accessed by persons.

It is considered that if as a means capable of coping with these problems, a self-peelable film can be developed in which a coating film after drying is spontaneously peeled, collection operations can be easily carried out in a short time, and remote control by a robot or the like may be also possible.

As a technique related to a self-peelable film, Patent Literature 1 discloses a self-peelable penetrant inspection developer removing material obtained by dissolving a cellulose-based synthetic resin having strippable resin film-forming ability in a volatile organic solvent. Patent Literature 2 discloses a means in which a film containing an aqueous coating material as a main component and a water-soluble thickener is swollen with water to peel the film. On the other hand, as a technique different from a self-peelable film, Patent Literature 3 discloses a method in which a barrier coating is formed by applying a covering composition to a base material in advance, and the barrier coating and pollutants are removed from the base material after the pollutants are deposited on the barrier coating.

[Patent Literature 1]
   JP-A-59-171841
[Patent Literature 2]
   JP-A-2000-327958
[Patent Literature 3]
   JP-A-2010-530806

### Summary of the Invention

The present invention provides a method of removing pollutants attached on a surface of interest, the method comprising the steps of: forming a coating film by applying a self-peelable film forming composition containing components (A) to (C) to a surface of interest on which pollutants are attached; drying the coating film; and removing the pollutants together with the coating film by self-peeling of the coating film due to the drying:
(A) a film-forming component;
(B) a volatile solvent; and
(C) a silicone compound.

Further, the present invention provides use of a composition containing the following components (A) to (C) for removing pollutants on a surface of interest by self-peeling due to drying of a coating film:
(A) a film-forming component;
(B) a volatile solvent; and
(C) a silicone compound.

Further, the present invention provides a self-peelable film forming composition comprising the following components (A) to (C), wherein a mass ratio of the component (C) to the component (A), (C)/(A), is 0.01 or more and 1.00 or less:
(A) a film-forming component;
(B) a volatile solvent; and
(C) a silicone compound.

Further, the present invention provides a self-peelable film forming composition comprising the following components (A) to (C), wherein a peel level measured by the following evaluation method is 20% or more and 100% or less:
(A) a film-forming component;
(B) a volatile solvent; and
(C) a silicone compound:
   <evaluation method> the composition is applied to an epoxy resin-coated substrate plate at 0.3 g/cm², and dried for 24 hours; and an area of bonding between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

### Brief Description of Drawing

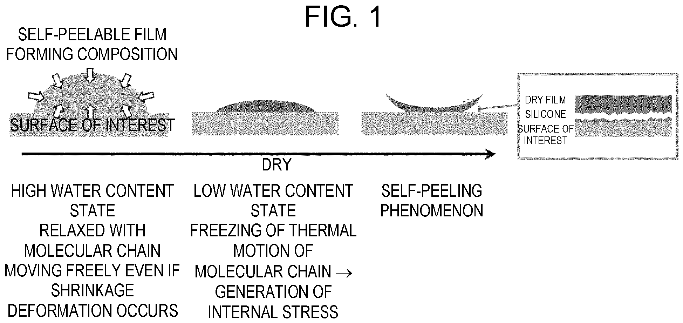

[Figure 1] Figure 1 shows a mechanism of self-peeling in a method of removing pollutants according to the present invention.

### Detailed Description of the Invention

In the technique disclosed in Patent Literature 1, there is a concern that an offensive odor is given off and workers may suffer from health injury because a considerable amount of an organic solvent is contained, and surfaces of surrounding equipment are damaged, and there is a problem that essentially, the self-peeling property is not sufficient. The method disclosed in Patent Literature 2 has problems of time and effort for operations and a risk to workers as it is necessary to swell the film by adding water thereto. Further, in the method disclosed in Patent Literature 3, a barrier coating and pollutants are removed by washing, wiping and the like, and thus the coating film removal method is not convenient.

Accordingly, the present invention relates to a method of removing pollutants, which ensures that removal of pollutants and operations of peeling and collecting a coating film to which the pollutants are adsorbed can be easily carried out in a short time by using a self-peelable film forming composition which is applied to a surface of interest, and then just dried to spontaneously peel the coating film.

The present inventors found that by using the self-peeling property of a composition containing a film-forming component and a silicone compound in a volatile solvent, pollutants can be removed while the above-described requirements are solved, leading to completion of the present invention.

In the present invention, the self-peeling means that the peel level of a dry coating film which is measured by the following evaluation method is 20% or more and 100% or less. The peel level is preferably 30% or more and 100% or less, furthermore preferably 40% or more and 100% or less, furthermore preferably 50% or more and 100% or less, furthermore preferably 60% or more and 100% or less, furthermore preferably 70 % or more and 100% or less. <Evaluation method> the composition is applied to an epoxy resin-coated substrate plate at 0.3 g/cm², and dried for 24 hours; and an area of bonding between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

### [Component (A): film-forming component]

A film-forming component as a component (A) exists in a state of being dissolved or dispersed in the self-peelable film forming composition of the present invention, and includes what is generally called a film-forming agent, a coating material or an aqueous thickener. The component (A) is a polymer whose glass transition point is preferably 0°C or higher, more preferably 10°C or higher, further more preferably 20°C or higher, further more preferably 30°C or higher, from the viewpoint of exhibiting a self-peeling property by internal stress during drying, and preferably 300°C or lower, more preferably 280°C or lower, further more preferably 260°C or lower, further more preferably 240°C or lower, from the viewpoint of improving film strength. The component (A) is preferably other than an equivalent of a component (C) described later, and preferably one or more polymers selected from the group consisting of polyvinyl alcohol, a copolymer having vinyl alcohol as a main structure, cellulose ether, polystyrene sulfonic acid or a salt thereof, an acrylic resin, xanthan gum, gellan gum and guar gum.

The weight average molecular weight of a film-forming component as the component (A) is preferably 5,000 or more, more preferably 7,000 or more, further more preferably 10,000 or more, from the viewpoint of improving formation of a coating film and self-peeling of a dry coating film, and preferably 10,000,000 or less, more preferably 5,000,000 or less, further more preferably 2,000,000 or less, from the viewpoint of improving application properties.

Marketed products can be used, such as Kuraray Povals 3-98, 5-98, 28-98, 60-98, 27-95, 27-96, 17-94, 7-92, 3-88, 5-88, 22-88, 44-88, 95-88 and 48-80 (manufactured by KURARAY CO., LTD.) for the polyvinyl alcohol, and PS-100 (manufactured by Tosoh Finechem Corporation) for the polystyrene sulfonic acid or a salt thereof. Examples of the copolymer having vinyl alcohol as a main structure include vinyl alcohol-ethylene copolymers, and hydrolysates of vinyl acetate-ethylene copolymers. As marketed products of hydrolysates of vinyl acetate-ethylene copolymers, Excevals RS2117, RS-2817, RS-1713, RS-1717, AQ-4104 and HR-3010 (manufactured by KURARAY CO., LTD.) can be used.

Examples of the cellulose ether include carboxymethyl cellulose or a salt thereof, and hydroxypropylmethyl cellulose. SUNROSE APP-84 (manufactured by Nippon Paper Industries Co., Ltd.) can be used as a marketed product of the carboxymethyl cellulose or a salt thereof, and METOLOSEs 60SH-15 and 60SH-03 (manufactured by Shin-Etsu Chemical Co., Ltd.) can be used as marketed products of the hydroxypropylmethyl cellulose.

As the acrylic resin, methacrylic acid/methyl methacrylate copolymers, methyl acrylate/methyl methacrylate/methacrylic acid polymers, octyl amide acrylate/acrylic acid alkyl ester copolymers (for example, DERMACRYL 79 manufactured by Nouryon N.V.), methacrylic acid/alkyl methacrylate/dimethylpolysiloxane block copolymers (for example, MAIBLOCKWAKO101 manufactured by FUJIFILM Wako Pure Chemical Corporation), methacrylic acid/1,1-dimethylethyl acrylate/ethyl acrylate copolymers (for example, Luvimer 100P manufactured by BASF SE) and the like can be used.

Among the components (A), polyvinyl alcohol and copolymers having vinyl alcohol as a main structure have high film strength after drying, and are therefore preferable from the viewpoint of good workability in removal of the film from a surface of interest. On the other hand, cellulose ether, polystyrene sulfonic acid or a salt thereof, acrylic resins, xanthan gum, gellan gum and guar gum are preferable from the viewpoint of excellent self-peeling property.

The content of the component (A) in the self-peelable film forming composition of the present invention is preferably 5 mass% or more, more preferably 7 mass% or more, further more preferably 9 mass% or more, from the viewpoint of sufficiently exhibiting the self-peeling property of the dry coating film, and preferably 50 mass% or less, more preferably 40 mass% or less, further more preferably 30 mass% or less, from the viewpoint of improving application properties.

When the surface of interest is a material having fine irregularities, such as a cement solidified product or concrete, the content of the component (A) in the self-peelable film forming composition of the present invention is preferably 14 mass% or more, more preferably 19 mass% or more, and preferably 35 mass% or less, more preferably 30 mass% or less, further more preferably 25 mass% or less, from the viewpoint of exhibiting sufficient film strength and self-peeling property.

### [Component (B): volatile solvent]

A volatile solvent as a component (B) is a substance having volatility in a liquid state, is selected from the group consisting of water and a volatile organic solvent, and preferably contains water, and more preferably contains water as a main component. It is also possible to use a volatile organic solvent in combination with water from the viewpoint of suitably forming a dry coating film by performing drying after application. Examples of the volatile organic solvent include alcohols such as ethanol, methanol and propanol, ketones such as acetone, and tetrahydrofuran, and one or more selected from the group consisting of alcohols and ketones are preferable. The vapor pressure of the volatile organic solvent at 20°C is preferably 0.01 kPa or more and 106.66 kPa or less, more preferably 0.13 kPa or more and 66.66 kPa or less, further more preferably 0.67 kPa or more and 40.00 kPa or less, even more preferably 1.33 kPa or more and 40.00 kPa or less. When the component (B) contains a volatile organic solvent, the proportion thereof is preferably 20 mass% or less, furthermore preferably 10 mass% or less, furthermore preferably 5 mass% or less of the total component (B).

The content of the component (B) in the self-peelable film forming composition of the present invention is preferably 50 mass% or more, more preferably 55 mass% or more, further more preferably 60 mass% or more, further more preferably 65 mass% or more, from the viewpoint of improving application properties to a surface of interest, and preferably 92 mass% or less, more preferably 90 mass% or less, further more preferably 80 mass% or less, further more preferably 70 mass% or less, from the viewpoint of enhancing the self-peeling property.

### [Component (C): silicone compound]

A silicone compound as a component (C) exists in a state of being dissolved or dispersed in the self-peelable film forming composition of the present invention, and has a function of reducing adhesive strength to a surface of interest by bleeding out from the coating film as a coating film is dried. Examples of the silicone compound include nonvolatile dimethylpolysiloxane having a kinetic viscosity of 6 mm²/s or more, polyether-modified silicone, amino-modified silicone, polyglycerol-modified silicone, and N-propionylethyleneimine-dimethylsiloxane copolymers.

The content of the component (C) in the self-peelable film forming composition of the present invention is preferably 0.02 mass% or more, more preferably 0.05 mass% or more, further more preferably 0.1 mass% or more, further more preferably 0.5 mass% or more, from the viewpoint of enhancing the self-peeling property of the dry coating film, and preferably 20 mass% or less, more preferably 15 mass% or less, further more preferably 10 mass% or less, further more preferably 7 mass% or less, from the viewpoint of stability of dispersion or dissolution.

The mass ratio of the component (C) to the component (A), (C)/(A), is preferably 0.01 or more, more preferably 0.05 or more, further more preferably 0.07 or more, and preferably 1.00 or less, more preferably 0.7 or less, further more preferably 0.5 or less, from the viewpoint of sufficiently exhibiting the self-peeling property of the dry coating film.

### [Optional components]

The self-peelable film forming composition of the present invention may further contain components such as a surfactant, a thickener and a plasticizer as long as the self-peeling property of the dry coating film is not impaired.

As the surfactant, any of an anionic surfactant, a cationic surfactant, a nonionic surfactant and an ampholytic surfactant can be used.

The thickener is a component other than the component (A) in the present invention, and for example, an inorganic thickener such as bentonite, magnesium aluminum silicate, laponite, hectorite or silicic anhydride, or the like may be used at such a low concentration that the thickener alone does not form a film. Examples of the plasticizer include propylene glycol, 1,3-butylene glycol, glycerin, isopentylene glycol, hexylene glycol, dipropylene glycol, polyethylene glycol, and polypropylene glycol.

The self-peelable film forming composition of the present invention may be a concentrate in which the content of the component (B) is reduced for the sake of transportation and the like, and in this case, the composition is used after being diluted with the component (B) so that the contents of the components (A) to (C) are in the above-described preferred ranges.

### [Method of removing pollutants]

A method of removing pollutants according to the present invention includes the steps of: forming a coating film by applying a self-peelable film forming composition containing components (A) to (C) to a surface of interest on which pollutants are attached; drying the coating film; and removing the pollutants together with the coating film by self-peeling of the coating film due to the drying.

In the present invention, the self-peelable film forming composition of the present invention is applied to a surface of interest on which pollutants are attached, and after that, the pollutants are adsorbed to the dry coating film in the process of drying of the composition. Consequently, the dry coating film to which the pollutants are adsorbed is spontaneously peeled from the surface of interest due to the drying. Here, the coating film of the self-peelable film forming composition of the present invention is gradually peeled from a peripheral portion of the coating film due to the drying. Thereafter, the peeled dry coating film can be collected to remove pollutants on the surface of interest.

Examples of the surface of interest of removing pollutants include surfaces of synthetic resins (epoxy resin, vinyl chloride, acrylic resin and the like), synthetic resin-coated surfaces, metal surfaces, glass surfaces, ceramic surfaces, and cement solidified product surfaces, and the surface may be smooth, or may have fine irregularities. Fine irregularities can be adapted so as not to inhibit self-peeling of a cement surface or the like. The surface of interest may be installed on any of floor surfaces, wall surfaces and ceilings of various facilities such as electric power plants, factories, warehouses, office buildings, condominiums, parking areas, roads, bridges and tunnels, and inclined spots such as slopes. As pollutants removed, powdered or particulate deposits (for example, powder dust of asbestos, dirt, sand, sludge, slime, soot and the like), oily deposits (for example, oily contaminants such as crude oil and tar, and painted coating materials from oil-based pens, lacquer sprays and the like), deposits derived from animals and plants (moss, algae, bird's droppings, dead bugs and the like), and salts can be covered. The technique of the present invention can also be used for removal of pollutants in nuclear power plants and asbestos and other hazardous substances, and operations under severe conditions.

Examples of the method for application to a surface of interest include a method of direct spreading using a spatula, a ground rake, a rake, a brush, a roller or the like, and a method of application by spraying using a spray or the like. The amount of application of the self-peelable film forming composition of the present invention to the surface of interest is preferably 0.1 kg/m² or more, more preferably 1 kg/m² or more, further more preferably 2 kg/m² or more, from the viewpoint of enhancing the self-peeling property of the dry coating film, and preferably 20 kg/m² or less, more preferably 15 kg/m² or less, further more preferably 10 kg/m² or less, from the viewpoint of ease of curing and film formation.

The step of drying the coating film after applying the composition to a surface of interest may be carried out by natural drying or air drying, and it is also possible to use a heat source such as a halogen heater. The environmental temperature in the drying step is preferably -10°C or higher, more preferably 0°C or higher, further more preferably 5°C or higher, and preferably 60°C or lower, more preferably 55°C or lower, further more preferably 50°C or lower.

In the method of removing pollutants according to the present invention, it is preferable that steps until self-peeling is started do not include a step of spreading or applying an aqueous composition containing water, or water other than that of the self-peelable film forming composition of the present invention at 50 mass% or more, from the viewpoint of avoiding inhibition of self-peeling. Further, it is more preferable that subsequent to the step of applying the self-peelable film forming composition of the present invention, the step of drying the coating film be carried out without other steps therebetween.

Figure 1 shows a mechanism of self-peeling in the method of removing pollutants according to the present invention. After the self-peelable film forming composition of the present invention is applied to a surface of interest, the coating film starts to shrink as a volatile solvent (water) as the component (B) is evaporated, but as long as the water content is high, the molecular chain of a film-forming component as the component (A) can move freely, so that internal stress is not generated. When drying proceeds, so that the water content becomes low, the coating film further shrinks, and the thermal motion of the molecular chain of the component (A) is frozen. It is presumed that this generates internal stress, and a silicone compound as the component (C) bleeds out from the coating film to form a layer between the coating film and the adherend (surface of interest). It is considered that at this time, the stress is concentrated on an end of the coating film, and the adhesive strength of the coating film to the surface of interest is reduced by the component (C) which has bled out, so that the coating film is likely to be spontaneously peeled from the end.

In connection with the embodiments described above, preferred aspects of the present invention are further disclosed below.

<1> A method of removing pollutants attached on a surface of interest, the method comprising the steps of: forming a coating film by applying a self-peelable film forming composition containing components (A) to (C) to a surface of interest on which pollutants are attached; drying the coating film; and removing the pollutants together with the coating film by self-peeling of the coating film due to the drying:
   (A) a film-forming component;
   (B) a volatile solvent; and
   (C) a silicone compound.
<2> The method of removing pollutants according to <1>, wherein preferably, the application of the self-peelable film forming composition to the surface of interest is performed using a ground rake, a rake, a brush, a roller or a spray.
<3> The method of removing pollutants according to <1> or <2>, wherein an amount of application of the self-peelable film forming composition to the surface of interest is preferably 0.1 kg/m² or more, more preferably 1 kg/m² or more, further more preferably 2 kg/m² or more, and preferably 20 kg/m² or less, more preferably 15 kg/m² or less, further more preferably 10 kg/m² or less.
<4> The method of removing pollutants according to any one of <1> to <3>, wherein preferably, after the step of forming a coating film by applying a self-peelable film forming composition to a surface of interest, the step of drying the coating film is carried out without other steps therebetween.
<5> The method of removing pollutants according to any one of <1> to <4>, wherein the drying step is carried out in an environment preferably at -10°C or higher, more preferably at 0°C or higher, further more preferably at 5°C or higher, and preferably at 60°C or lower, more preferably at 55°C or lower, further more preferably at 50°C or lower.
<6> The method of removing pollutants according to any one of <1> to <5>, wherein preferably, the coating film of the self-peelable film forming composition is peeled from a peripheral portion due to drying.
<7> The method of removing pollutants according to any one of <1> to <6>, wherein preferably, the step of removing pollutants together with the coating film comprises the step of collecting the peeled dry coating film.
<8> The method of removing pollutants according to any one of <1> to <7>, wherein the component (A) is a polymer having a glass transition point of preferably 0°C or higher, more preferably 10°C or higher, further more preferably 20°C or higher, further more preferably 30°C or higher, and preferably 300°C or lower, more preferably 280°C or lower, further more preferably 260°C or lower, further more preferably 240°C or lower.
<9> The method of removing pollutants according to any one of <1> to <8>, wherein a weight average molecular weight of the component (A) is preferably 5,000 or more, more preferably 7,000 or more, further more preferably 10,000 or more, and preferably 10,000,000 or less, more preferably 5,000,000 or less, further more preferably 2,000,000 or less.
<10> The method of removing pollutants according to any one of <1> to <9>, wherein the component (A) is preferably one or more selected from the group consisting of polyvinyl alcohol, a copolymer having vinyl alcohol as a main structure, cellulose ether, polystyrene sulfonic acid or a salt thereof, an acrylic resin, xanthan gum, gellan gum and guar gum.
<11> The method of removing pollutants according to any one of <1> to <10>, wherein a content of the component (A) in the self-peelable film forming composition is preferably 5 mass% or more, more preferably 7 mass% or more, further more preferably 9 mass% or more, and preferably 50 mass% or less, more preferably 40 mass% or less, further more preferably 30 mass% or less.
<12> The method of removing pollutants according to any one of <1> to <10>, wherein the surface of interest is a material having fine irregularities, and the content of the component (A) in the self-peelable film forming composition is preferably 14 mass% or more, more preferably 19 mass% or more, and preferably 35 mass% or less, more preferably 30 mass% or less, further more preferably 25 mass% or less.
<13> The method of removing pollutants according to any one of <1> to <12>, wherein the component (B) is preferably selected from the group consisting of water and a volatile organic solvent, more preferably contains water, and further more preferably contains water as a main component.
<14> The method of removing pollutants according to <13>, wherein a vapor pressure of the volatile organic solvent at 20°C is preferably 0.01 kPa or more and 106.66 kPa or less, more preferably 0.13 kPa or more and 66.66 kPa or less, further more preferably 0.67 kPa or more and 40.00 kPa or less, further more preferably 1.33 kPa or more and 40.00 kPa or less.
<15> The method of removing pollutants according to <13> or <14>, wherein a proportion of the volatile organic solvent in the component (B) is 20 mass% or less, furthermore 10 mass% or less, furthermore 5 mass% or less of the total component (B).
<16> The method of removing pollutants according to any one of <1> to <15>, wherein a content of the component (B) in the self-peelable film forming composition is preferably 50 mass% or more, more preferably 55 mass% or more, further more preferably 60 mass% or more, further more preferably 65 mass% or more, and preferably 92 mass% or less, more preferably 90 mass% or less, further more preferably 80 mass% or less, further more preferably 70 mass% or less.
<17> The method of removing pollutants according to any one of <1> to <16>, wherein the component (C) is selected from the group consisting of nonvolatile dimethylpolysiloxane having a kinetic viscosity of 6 mm²/s or more, polyether-modified silicone, amino-modified silicone, polyglycerol-modified silicone, and a N-propionylethyleneimine-dimethylsiloxane copolymer.
<18> The method of removing pollutants according to any one of <1> to <17>, wherein a content of the component (C) in the self-peelable film forming composition is preferably 0.02 mass% or more, more preferably 0.05 mass% or more, further more preferably 0.1 mass% or more, further more preferably 0.5 mass% or more, and preferably 20 mass% or less, more preferably 15 mass% or less, further more preferably 10 mass% or less, further more preferably 7 mass% or less.
<19> The method of removing pollutants according to any one of <1> to <18>, wherein a mass ratio of the component (C) to the component (A), (C)/(A), in the self-peelable film forming composition is preferably 0.01 or more, more preferably 0.05 or more, further more preferably 0.07 or more, and preferably 1.00 or less, more preferably 0.7 or less, further more preferably 0.5 or less.
<20> Use of a composition containing the following components (A) to (C) for removing pollutants on a surface of interest by self-peeling due to drying of a coating film:
   (A) a film-forming component;
   (B) a volatile solvent; and
   (C) a silicone compound.
<21> A self-peelable film forming composition comprising the following components (A) to (C), wherein a mass ratio of the component (C) to the component (A), (C)/(A), is 0.01 or more and 1.00 or less:
   (A) a film-forming component;
   (B) a volatile solvent; and
   (C) a silicone compound.
<22> The self-peelable film forming composition according to <21>, wherein the component (A) is a polymer having a glass transition point of preferably 0°C or higher, more preferably 10°C or higher, further more preferably 20°C or higher, further more preferably 30°C or higher, and preferably 300°C or lower, more preferably 280°C or lower, further more preferably 260°C or lower, further more preferably 240°C or lower.
<23> The self-peelable film forming composition according to <21> or <22>, wherein a weight average molecular weight of the component (A) is preferably 5,000 or more, more preferably 7,000 or more, further more preferably 10,000 or more, and preferably 10,000,000 or less, more preferably 5,000,000 or less, further more preferably 2,000,000 or less.
<24> The self-peelable film forming composition according to any one of <21> to <23>, wherein the component (A) is preferably one or more selected from the group consisting of polyvinyl alcohol, a copolymer having vinyl alcohol as a main structure, cellulose ether, polystyrene sulfonic acid or a salt thereof, an acrylic resin, xanthan gum, gellan gum and guar gum.
<25> The self-peelable film forming composition according to any one of <21> to <24>, wherein a content of the component (A) is preferably 5 mass% or more, more preferably 7 mass% or more, further more preferably 9 mass% or more, and preferably 50 mass% or less, more preferably 40 mass% or less, further more preferably 30 mass% or less.
<26> The self-peelable film forming composition according to any one of <21> to <25>, wherein the component (B) is preferably selected from the group consisting of water and a volatile organic solvent, more preferably contains water, and further more preferably contains water as a main component.
<27> The self-peelable film forming composition according to <26>, wherein a vapor pressure of the volatile organic solvent at 20°C is preferably 0.01 kPa or more and 106.66 kPa or less, more preferably 0.13 kPa or more and 66.66 kPa or less, further more preferably 0.67 kPa or more and 40.00 kPa or less, further more preferably 1.33 kPa or more and 40.00 kPa or less.
<28> The self-peelable film forming composition according to <26> or <27>, wherein a proportion of the volatile organic solvent in the component (B) is 20 mass% or less, furthermore 10 mass% or less, furthermore 5 mass% or less of the total component (B).
<29> The self-peelable film forming composition according to any one of <21> to <28>, wherein a content of the component (B) is preferably 50 mass% or more, more preferably 55 mass% or more, further more preferably 60 mass% or more, further more preferably 65 mass% or more, and preferably 92 mass% or less, more preferably 90 mass% or less, further more preferably 80 mass% or less, further more preferably 70 mass% or less.
<30> The self-peelable film forming composition according to any one of <21> to <29>, wherein the component (C) is selected from the group consisting of nonvolatile dimethylpolysiloxane having a kinetic viscosity of 6 mm²/s or more, polyether-modified silicone, amino-modified silicone, polyglycerol-modified silicone, and a N-propionylethyleneimine-dimethylsiloxane copolymer.
<31> The self-peelable film forming composition according to any one of <21> to <30>, wherein a content of the component (C) is preferably 0.02 mass% or more, more preferably 0.05 mass% or more, further more preferably 0.1 mass% or more, further more preferably 0.5 mass% or more, and preferably 20 mass% or less, more preferably 15 mass% or less, further more preferably 10 mass% or less, further more preferably 7 mass% or less.
<32> The self-peelable film forming composition according to any one of <21> to <31>, wherein a mass ratio of the component (C) to the component (A), (C)/(A), is preferably 0.01 or more, more preferably 0.05 or more, further more preferably 0.07 or more, and preferably 1.00 or less, more preferably 0.7 or less, further more preferably 0.5 or less.
<33> A self-peelable film forming composition comprising the following components (A) to (C), wherein a peel level measured by the following evaluation method is 20% or more and 100% or less:
   (A) a film-forming component;
   (B) a volatile solvent; and
   (C) a silicone compound:
      <evaluation method> the composition is applied to an epoxy resin-coated substrate plate at 0.3 g/cm², and dried for 24 hours; and an area of bonding between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

### Examples

### Synthesis Example 1: Example of synthesis of N-propionylethyleneimine-dimethylsiloxane copolymer

53.2 g (0.53 mol) of 2-ethyl-2-oxazoline and 127.5 g of ethyl acetate were mixed, and the mixed liquid was dehydrated with 9.0 g of a molecular sieve (trade name: Zeolum A-4 manufactured by TOSOH CORPORATION) for 15 hours. 153.75 g of polydimethylsiloxane modified with primary aminopropyl on side chains (weight average molecular weight: 50,000, amine equivalent: 2,000) and 312.6 g of ethyl acetate were mixed, and the mixed liquid was dehydrated with 22.7 g of a molecular sieve for 15 hours.

To the dehydrated ethyl acetate solution of 2-ethyl-2-oxazoline, 9.98 g (0.064 mol) of diethyl sulfate was added, and the mixture was heated under reflux at 80°C for 8 hours in a nitrogen atmosphere to synthesize terminally reactive poly(N-propionylethyleneimine). The terminally reactive poly(N-propionylethyleneimine) solution was collectively added to the dehydrated solution of polydimethylsiloxane modified with primary aminopropyl on side chains, and the mixture was heated under reflux at 80°C for 10 hours. The reaction mixture was concentrated under reduced pressure to obtain a N-propionylethyleneimine-dimethylsiloxane copolymer as a light yellow rubbery solid (200 g, yield: 92%).

The mass ratio of organopolysiloxane segments in the final product was 0.70, and the weight average molecular weight of the final product was 70,400 (calculated value).

The obtained N-propionylethyleneimine-dimethylsiloxane copolymer was dissolved in ethanol at a solid content concentration of 40 mass% to obtain an ethanol solution of a N-propionylethyleneimine-dimethylsiloxane copolymer.

### Synthesis Example 2: Example of synthesis of methacrylic acid/methyl methacrylate copolymer

50 g of methacrylic acid, 50 g of methyl methacrylate and 380 g of ethanol were mixed with stirring while being bubbled with nitrogen, and the mixture was heated to 60°C. To the obtained mixed liquid, a solution obtained by dissolving 0.54 g of 2,2'-azobis(2,4-dimethylvaleronitrile) in 20 g of ethanol was added dropwise over 30 minutes while stirring was performed at 60°C for 4 hours in a nitrogen atmosphere, thereby synthesizing a methacrylic acid/methyl methacrylate copolymer. The reaction mixture was reprecipitated in an acetone/hexane mixed solvent (acetone : hexane = 1 : 2, volume ratio), and the obtained precipitate was dried under reduced pressure at 50°C to obtain a methacrylic acid/methyl methacrylate copolymer as a white solid. The mass ratios of constituent units derived from methacrylic acid and methyl methacrylate in the final product were 50 mass% and 50 mass%, respectively (calculated from a loading composition ratio).

### Examples 1 to 23 and Comparative Example 1

Compositions shown in Tables 1 to 4 were prepared, and the peel level (%) was measured in accordance with the method shown below. The tables show numerical values of the peel level, with "A" for compositions giving a peel level of 20% or more and "B" for compositions giving a peel level of less than 20%.

### (Peel level evaluation method)

Each composition was applied to a 10 cm² area of an epoxy resin-coated substrate plate (Tables 1 to 3) or a cement solidified product substrate plate (Table 4) at 0.3 g/cm², and dried at 25°C and 40%RH for 24 hours to prepare a sample.

An area of bonding between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.

### <Glass transition point>

The glass transition point of a polymer as the film-forming component (A) described in each of Examples was determined by performing DSC measurement under the following conditions for a dry solid obtained by drying each sample at room temperature for 24 hours, and then drying the sample under reduced pressure at 80°C.

Measuring apparatus: DSC7000X (Hitachi High-Tech Corporation) Temperature profile:
1. The sample is heated from 20°C to a target temperature at 10°C/min, and held for 5 minutes.
2. The sample is cooled from the target temperature to 20°C at 10°C/min, and held for 5 minutes.
3. The sample is heated from 20°C to a target temperature at 10°C/min, and held for 5 minutes.
4. The sample is cooled from the target temperature to 20°C at 10°C/min, and held for 5 minutes.

The measurement was performed with the target temperature set to 250°C for Kuraray Povals 60-98, 28-98 and 5-98, SUNROSE APP-84 and the copolymer synthesized in Synthesis Example 2, and 350°C for PS-100.

**[Table 1]**

| Component (mass%) | | Comparative Example | Example | | | | | |
|---|---|---|---|---|---|---|---|---|
| | | 1 | 1 | 2 | 3 | 4 | 5 | 6 |
| (A) | Polyvinyl alcohol (*1) | 10.00 | 10.00 | 10.00 | 10.00 | 10.00 | 10.00 | 10.00 |
| (B) | Water | Balance | Balance | Balance | Balance | Balance | Balance | Balance |
| (C) | Polyether-modified silicone (*2) | - | - | 2.00 | - | - | - | - |
| | Polyether-modified silicone (*3) | - | 0.10 | - | 2.00 | - | - | 2.00 |
| | Polyether-modified silicone (*4) | - | - | - | - | 2.00 | - | - |
| | Polyether-modified silicone (*5) | - | - | - | - | - | 2.00 | - |
| | Ethanol solution of copolymer of Synthesis Example 1 (*6) | - | - | - | - | - | - | 5.00 |
| Peel level (%) | Epoxy resin-coated substrate plate | B | A | A | A | A | A | A |
| | | 0 | 48 | 98 | 100 | 73 | 82 | 100 |
| Mass ratio (C)/(A) | | 0.000 | 0.010 | 0.200 | 0.200 | 0.200 | 0.200 | 0.400 |

**[Table 2]**

| Component (mass%) | | Example | | | | | | | |
|---|---|---|---|---|---|---|---|---|---|
| | | 7 | 8 | 9 | 10 | 11 | 12 | 13 | 14 |
| (A) | Polyvinyl alcohol (*7) | 10.00 | 10.00 | 10.00 | - | - | - | - | - |
| | Polyvinyl alcohol (*8) | - | - | - | 10.00 | - | - | - | - |
| | Polyvinyl alcohol (*1) | - | - | - | - | 10.00 | 10.00 | 10.00 | 10.00 |
| (B) | Water | Balance | Balance | Balance | Balance | Balance | Balance | Balance | Balance |
| (C) | Polyether-modified silicone (*3) | 2.00 | - | 2.00 | 2.00 | | | - - - | - |
| | Polyether-modified silicone (*4) | - | 2.00 | - | - | | | | |
| | Ethanol solution of copolymer of Synthesis Example 1 (*6) | - | - | 5.00 | 5.00 | - | - | - | - |
| | Amino-modified silicone (*9) | - | - | - | - | 0.80 | - | - | - |
| | Reacted product of dimethyl siloxane and hydroxy-terminated aminoethylaminopropyl silsesquioxane (*10) | - | - | - | - | - | 0.80 | - | - |
| | Dimethylpolysiloxane (*11) | - | - | - | - | - | - | 1.50 | - |
| | Dimethylpolysiloxane (*12) | - | - | - | - | - | - | - | 0.88 |
| Peel level (%) | Epoxy resin-coated substrate plate | A | A | A | A | A | A | A | A |
| | | 100 | 71 | 100 | 100 | 100 | 100 | 100 | 100 |
| Mass ratio (C)/(A) | | 0.200 | 0.200 | 0.400 | 0.400 | 0.080 | 0.080 | 0.150 | 0.088 |

**[Table 3]**

| Component (mass%) | | Example | | | |
|---|---|---|---|---|---|
| | | 15 | 16 | 17 | 18 |
| (A) | Polyvinyl alcohol (*13) | 1.00 | 1.00 | 1.00 | 1.00 |
| | Hydrolysate of vinyl acetate-ethylene copolymer (*14) | 9.00 | 9.00 | 9.00 | 9.00 |
| | Xanthan gum (*15) | - | 1.00 | - | - |
| | Gellan gum (*16) | - | - | 0.30 | - |
| | Cationized guar gum (*17) | - | - | - | 1.00 |
| (B) | Water | Balance | Balance | Balance | Balance |
| (C) | Polyether-modified silicone (*3) | 2.00 | 2.00 | 2.00 | 2.00 |
| | Ethanol solution of copolymer of Synthesis Example 1 (*6) | 5.00 | - | - | - |
| Peel level (%) | Epoxy resin-coated substrate plate | A | A | A | A |
| | | 100 | 100 | 100 | 68 |
| Mass ratio (C)/(A) | | 0.200 | 0.182 | 0.194 | 0.182 |

**[Table 4]**

| Component (mass%) | | Example | | | | |
|---|---|---|---|---|---|---|
| | | 19 | 20 | 21 | 22 | 23 |
| (A) | Polyvinyl alcohol (*7) | - | 20.00 | - | - | - |
| | Polyvinyl alcohol (*1) | 15.00 | - | - | - | - |
| | Carboxymethylcellulose sodium (*18) | - | - | 20.00 | - | - |
| | Sodium polystyrene sulfonate (*19) | - | - | - | 20.00 | - |
| | Neutralized product of copolymer in Synthesis Example 2 (*20) | - | - | - | - | 20.00 |
| (B) | Water | Balance | Balance | Balance | Balance | Balance |
| (C) | Polyether-modified silicone (*3) | 2.00 | 2.00 | - | 2.00 | 2.00 |
| | Ethanol solution of copolymer of Synthesis Example 1 (*6) | 5.00 | 5.00 | - | - | - |
| | Polyglycerol-modified silicone (*21) | - | - | 2.00 | - | - |
| Peel level (%) | Pure cement solidified product substrate plate | A | A | A | A | A |
| | | 69 | 56 | 35 | 78 | 75 |
| Mass ratio (C)/(A) | | 0.267 | 0.200 | 0.100 | 0.100 | 0.100 |

*1: Kuraray Poval 60-98 (manufactured by KURARAY CO., LTD.), Tg: 70°C, weight average molecular weight: 106,000
*2: BYK-345 (manufactured by BYK-Chemie)
*3: KF-6011 (manufactured by Shin-Etsu Chemical Co., Ltd.)
*4: KF-6204 (manufactured by Shin-Etsu Chemical Co., Ltd.)
*5: KF-352A (manufactured by Shin-Etsu Chemical Co., Ltd.)
*6: 40 mass% ethanol solution of N-propionylethyleneimine-dimethylsiloxane copolymer produced in Synthesis Example 1
*7: Kuraray Poval 5-98 (manufactured by KURARAY CO., LTD.), Tg: 60°C, weight average molecular weight: 22,000
*8: Kuraray Poval 28-98 (manufactured by KURARAY CO., LTD.), Tg: 70°C, weight average molecular weight: 75,000
*9: SILSOFT EM341N (manufactured by Momentive Performance Materials Japan LLC)
*10: DOWSIL SM8904 cosmetic emulsion (manufactured by Dow Toray Co., Ltd.)
*11: DOWSIL CF-2460 (manufactured by Dow Toray Co., Ltd.)
*12: BELSIL DM 3102 E (manufactured by Wacker AsahiKasei Silicone Co., Ltd.)
*13: Kuraray Poval 22-88 (manufactured by KURARAY CO., LTD.), Tg: 60°C, weight average molecular weight: 75,000
*14: Exceval RS2117 (manufactured by KURARAY CO., LTD.), Tg: 63°C, weight average molecular weight: 75,000
*15: ECHO GUM LAX-T (manufactured by DSP Gokyo Food & Chemical Co., Ltd.), Tg: 82°C, weight average molecular weight: 2,000,000
*16: Kelco Gel HM (manufactured by CP Kelco Company), Tg: 140°C, weight average molecular weight: 500,000
*17: RHABALL GUM CG-M (manufactured by DSP Gokyo Food & Chemical Co., Ltd.), Tg: 130°C, weight average molecular weight: 300,000
*18: SUNROSE APP-84 (manufactured by Nippon Paper Industries Co., Ltd.), Tg: 120°C, weight average molecular weight: 17,000
*19: PS-100 (manufactured by Tosoh Finechem Corporation), Tg: 220°C, weight average molecular weight: 700,000
*20: Methacrylic acid/methyl methacrylate copolymer synthesized in Synthesis Example 2 (neutralized to pH 7 using NaOH), Tg: 170°C, weight average molecular weight: 130,000
*21: SOFCARE GS-G (manufactured by Kao Corporation)

For the compositions of Examples 1, 6, 10, 15, 20 and 22, the film strength was evaluated in accordance with the method shown below. Table 5 shows the results.

### (Film strength)

The composition was dried to a dry thickness of 500 µm on a glass plate or a Teflon sheet in an environment at a temperature of 25°C and a humidity of 50%RH to obtain a dry film. With respect to an operation in which the obtained film was bent by 90 ° or folded by 180 °, and then unfolded, "a" was assigned when the film was not broken, "c" was assigned when the film was broken, and "b" was assigned when the film had folding stripes or cracks, but was not broken.

**[Table 5]**

| | | Example | | | | | |
|---|---|---|---|---|---|---|---|
| | | 1 | 6 | 10 | 15 | 20 | 22 |
| Film strength | 90° bending test | a | a | a | a | a | a |
| | 180° folding test | a | a | a | a | b | a |

## Claims

1. A method of removing pollutants attached on a surface of interest, the method comprising the steps of: forming a coating film by applying a self-peelable film forming composition containing components (A) to (C) to a surface of interest on which pollutants are attached; drying the coating film; and removing the pollutants together with the coating film by self-peeling of the coating film due to the drying:
(A) a film-forming component;
(B) a volatile solvent; and
(C) a silicone compound.

2. The method of removing pollutants according to claim 1, wherein the step of removing pollutants together with the coating film comprises the step of collecting peeled dry coating film.

3. The method of removing pollutants according to claim 1 or 2, wherein the coating film of the self-peelable film forming composition is peeled from a peripheral portion due to drying.

4. The method of removing pollutants according to any one of claims 1 to 3, wherein an amount of application of the self-peelable film forming composition to the surface of interest is 0.1 kg/m² or more.

5. The method of removing pollutants according to any one of claims 1 to 4, wherein the drying step is carried out in an environment at -10°C or higher and 60°C or lower.

6. The method of removing pollutants according to any one of claims 1 to 5, wherein the component (A) is a polymer having a glass transition point of 0°C or higher and 300°C or lower.

7. The method of removing pollutants according to any one of claims 1 to 6, wherein the component (A) is one or more selected from the group consisting of polyvinyl alcohol, a copolymer having vinyl alcohol as a main structure, cellulose ether, polystyrene sulfonic acid or a salt thereof, an acrylic resin, xanthan gum, gellan gum and guar gum.

8. The method of removing pollutants according to any one of claims 1 to 7, wherein the component (B) contains water.

9. Use of a composition comprising the following components (A) to (C) for removing pollutants on a surface of interest by self-peeling due to drying of a coating film:
(A) a film-forming component;
(B) a volatile solvent; and
(C) a silicone compound.

10. A self-peelable film forming composition comprising the following components (A) to (C), wherein a mass ratio of the component (C) to the component (A), (C)/(A), is 0.01 or more and 1.00 or less:
(A) a film-forming component;
(B) a volatile solvent; and
(C) a silicone compound.

11. The self-peelable film forming composition according to claim 10, wherein the component (A) is a polymer having a glass transition point of 0°C or higher and 300°C or lower.

12. The self-peelable film forming composition according to claim 10 or 11, wherein a weight average molecular weight of the component (A) is 5,000 or more and 10,000,000 or less.

13. The self-peelable film forming composition according to any one of claims 10 to 12, wherein the component (A) is one or more selected from the group consisting of polyvinyl alcohol, a copolymer having vinyl alcohol as a main structure, cellulose ether, polystyrene sulfonic acid or a salt thereof, an acrylic resin, xanthan gum, gellan gum and guar gum.

14. The self-peelable film forming composition according to any one of claims 10 to 13, wherein the component (B) contains water.

15. A self-peelable film forming composition comprising the following components (A) to (C), wherein a peel level measured by the following evaluation method is 20% or more and 100% or less:
(A) a film-forming component;
(B) a volatile solvent; and
(C) a silicone compound:
<evaluation method> the composition is applied to an epoxy resin-coated substrate plate at 0.3 g/cm², and dried for 24 hours; and an area of bonding between the substrate plate and the composition spread wetly on the substrate plate before drying, S₁, and an area of contact of the coating film with the substrate plate after drying, S₂, are measured, and a value of (S₁-S₂)/S₁ is calculated and defined as the peel level.
